# EUROPEAN PATENT APPLICATION

(11) **EP 4 761 328 A1**
(43) Date of publication of application: **17.06.2026**
(21) Application number: 24861723.5
(22) Date of filing: 29.07.2024
(51) Int. Cl.: H04W 24/02

(54) **COMMUNICATION METHOD AND APPARATUS**

(30) Priority: 05.09.2023 CN 202311146474
(71) Applicant: HUAWEI TECHNOLOGIES CO., LTD., Shenzhen 518129 (CN)
(72) Inventor: WANG, Sihai, Shenzhen, Guangdong 518129 (CN); QIN, Cheng, Shenzhen, Guangdong 518129 (CN); YANG, Rui, Shenzhen, Guangdong 518129 (CN)
(74) Representative: Gill Jennings & Every LLP
(86) International application number: PCT/CN2024/108266
(87) International publication number: WO 2025/050878

(57) **Abstract**

Embodiments of this application relate to the communication field, and provide a communication method and apparatus, to implement AI/ML-based mobility optimization at low computational costs and/or transmission costs. The communication method includes: A network device configures, for a terminal device by using a first message, a first action related to mobility (for example, cell handover or reselection) and a trigger condition for performing the first action, so that the terminal device may perform the first action when the trigger condition is satisfied. In this way, the first action can be performed when AI/ML enhancement brings a significant gain, to avoid additional computational costs and/or data transmission costs caused by execution of an AI/ML model without gains.

## Description

This application claims priority to Chinese Patent Application No. 202311146474.2, filed with the China National Intellectual Property Administration on September 5, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

In a wireless communication system, when a terminal device moves, the terminal device may move from coverage of a cell to coverage of another cell. To ensure service continuity and communication quality for the terminal device, the terminal device needs to be handed over between different cells. Currently, for cell handover, a network device determines a target cell based on a reference signal received power (reference signal received power, RSRP), a signal to interference plus noise ratio (signal to interference plus Noise Ratio, SINR), reference signal received quality (reference signal received quality, RSRQ), or the like that is of a cell neighboring a current serving cell and that is measured at a moment and reported by the terminal device, and indicates the terminal device to be handed over from a current cell to the target cell.

However, in the foregoing cell handover decision process, performance of the handover of the terminal device may be poor. For example, the terminal device is disconnected during the handover, ping-pong handover occurs, or the terminal device stays in a cell briefly and then is immediately handed over to another cell (short-time access to the cell). All these situations can negatively affect user experience. To avoid these handover situations, an artificial intelligence (artificial intelligence, Al)/machine learning (machine learning, ML)-based mobility optimization solution is currently introduced. For example, the network device predicts an RSRP of each cell within a period of time by using an AI/ML model, determines the target cell based on a prediction result, and indicates the terminal device to perform cell handover. However, execution of AI/ML model inference (or training) may result in additional computational costs and/or data transmission costs.

### SUMMARY

Embodiments of this application provide a communication method and apparatus, to implement AI/ML-based mobility optimization at low computational costs and/or transmission costs.

To achieve the foregoing objective, the following technical solutions are used in this application.

According to a first aspect, a communication method is provided. The method may be performed by a terminal device, may be performed by a part of the terminal device, for example, a processor, a chip, or a chip system of the terminal device, or may be implemented by a logical module or software that can implement all or some functions of the terminal device. The method includes: receiving a first message, where the first message includes condition information and action information, the condition information indicates a trigger condition for the terminal device to perform a first action, the action information indicates the first action, the first action is associated with mobility, and the trigger condition includes at least one of the following: the terminal device is at a preset location, a movement trajectory of the terminal device is a preset trajectory, channel state information CSI measured by the terminal device is preset CSI, a speed of the terminal device reaches a preset speed, time of the terminal device reaches preset time, the terminal device detects a cell on a preset frequency band or frequency channel number through measurement, or the terminal device satisfies or completes a preset event; and performing the first action when the trigger condition is satisfied.

Based on the communication method, a network device configures, for the terminal device by using the first message, the first action related to mobility (for example, cell handover or reselection) and the trigger condition for performing the first action, so that the terminal device may perform the first action when the trigger condition is satisfied. Therefore, in a scenario of AI/ML-based mobility optimization, when it is determined based on a current handover method that cell handover or reselection is suboptimal (where the trigger condition is set based on a cause or a condition that may lead to suboptimal cell handover or reselection), AI/ML may be used to enhance cell handover or reselection, to improve handover or reselection performance, so that computational costs and data transmission costs caused by model training or inference in another cell handover or reselection scenario in which AI/ML is not needed can be reduced, to avoid a waste of resources. In other words, the first action (for example, AI/ML model training or inference, target data collection or reporting) is performed when AI/ML enhancement brings a significant gain, to avoid additional computational costs and/or data transmission costs caused by execution of an AI/ML model without gains.

In a possible design scheme, the preset event may include a measurement event and/or a mobility event. The mobility event may include the cell handover or reselection.

In a possible design scheme, the first action may include at least one of the following: collecting target data, stopping collecting the target data, or reporting the target data. The target data is used by the network device to perform mobility-related model training or inference. In the design scheme, an AI/ML model is deployed on a network device side, in other words, the network device implements AI/ML-based mobility optimization. The network device may perform AI/ML model inference or training based on the target data collected and reported by the terminal device based on the trigger condition, to improve mobility performance of the terminal device.

In a possible design scheme, the target data may include data used for model input and/or data used for model training.

In a possible design scheme, the data used for model input may include at least one of the following: a measurement result of a current serving or camped cell, a measurement result of a cell neighboring the current serving or camped cell, CSI of the current serving cell, a motion feature of the terminal device, service information of the terminal device, or time information of the terminal device. In this embodiment of this application, the data used for model input may be used as input data for model training, or may be used as input data for model inference.

In a possible design scheme, the data used for model training may include at least one of the following: execution time of the cell handover or reselection, a cell handover success, a cell handover failure, ping-pong handover, short-time access to a cell, a change in quality of experience QoE before and after the cell handover, a change in a measurement result of at least one cell, a measurement result of the current serving or camped cell at a future moment, a measurement result of the cell neighboring the current serving or camped cell at a future moment, a reselection success, a reselection failure, or frequent reselection. The execution time of the cell handover or reselection may be understood as start time or a start moment of the cell handover or reselection. In this embodiment of this application, the data used for model training may include label data and/or ground truth data used for model training. There may be a binding relationship between the data used for model training and the data used for model input. To be specific, the data used for model training and the data used for model input may form one or more sets of training data in a form such as (***x**ᵢ, **y**ᵢ*)*. i* is a data sequence number. ***x**ᵢ* is the data used for model input, and may also be understood as the input data used for model training herein. ***y**ᵢ* is the data used for model training, and may be the label data and/or the ground truth data. A correspondence between the data used for model training and the data used for model input may be explicitly or implicitly indicated. This is not limited herein. During model training, the data ***y**ᵢ* used for model training may be compared with output data used when the model inputs ***x**ᵢ*, and a trainable parameter in the model is adjusted based on a comparison result by using a method such as back propagation or gradient descent, to obtain a model used for inference.

In a possible design scheme, the first action may include at least one of the following: performing the mobility-related model inference, performing the mobility-related model training, or obtaining mobility-related prediction data. Based on the design scheme, the AI/ML model is deployed on a terminal device side, in other words, the terminal device implements mobility optimization. The terminal device may perform AI/ML model inference or training based on the trigger condition, to obtain mobility-related prediction data, so as to improve mobility performance of the terminal device. In this embodiment of this application, that the terminal device performs the AI/ML model inference or training may be performing the AI/ML model inference or training on the terminal device, or may be performing the AI/ML model inference or training on a device (for example, a server) associated with the terminal device. This is not limited herein.

In a possible design scheme, the prediction data may include at least one of the following: a target cell for the cell handover or reselection, a success probability of the cell handover or reselection, signal quality of the current serving or camped cell, signal quality of at least one cell neighboring the current serving or camped cell, or time for the cell handover or reselection.

According to a second aspect, a communication method is provided. The method may be performed by a network device, may be performed by a part of the network device, for example, a processor, a chip, or a chip system of the network device, or may be implemented by a logical module or software that can implement all or some functions of the network device. The method includes: determining condition information and action information, where the condition information indicates a trigger condition for a terminal device to perform a first action, the action information indicates the first action, the first action is associated with mobility, and the trigger condition includes at least one of the following: the terminal device is at a preset location, a movement trajectory of the terminal device is a preset trajectory, channel state information CSI measured by the terminal device is preset CSI, a speed of the terminal device reaches a preset speed, time of the terminal device reaches preset time, the terminal device detects a cell on a preset frequency band or frequency channel number through measurement, or the terminal device satisfies or completes a preset event; and sending a first message, where the first message includes the condition information and the action information.

In a possible design scheme, the preset event may include a measurement event and/or a mobility event. The mobility event may include cell handover or reselection.

In a possible design scheme, the first action may include at least one of the following: collecting target data, stopping collecting the target data, or reporting the target data. The target data is used by the network device to perform mobility-related model training or inference.

In a possible design scheme, the target data may include data used for model input and/or data used for model training.

In a possible design scheme, the data used for model input may include at least one of the following: a measurement result of a current serving or camped cell, a measurement result of a cell neighboring the current serving or camped cell, CSI of the current serving cell, a motion feature of the terminal device, service information of the terminal device, or time information of the terminal device.

In a possible design scheme, the data used for model training may include at least one of the following: execution time of the cell handover or reselection, a cell handover success, a cell handover failure, ping-pong handover, short-time access to a cell, a change in quality of experience QoE before and after the cell handover, a change in a measurement result of at least one cell, a measurement result of the current serving or camped cell at a future moment, a measurement result of the cell neighboring the current serving or camped cell at a future moment, a reselection success, a reselection failure, or frequent reselection.

In a possible design scheme, the first action may include at least one of the following: performing the mobility-related model inference, performing the mobility-related model training, or obtaining mobility-related prediction data.

In a possible design scheme, the prediction data may include at least one of the following: a target cell for the cell handover or reselection, a success probability of the cell handover or reselection, signal quality of the current serving or camped cell, signal quality of at least one cell neighboring the current serving or camped cell, or time for the cell handover or reselection.

For technical effects of the method in the second aspect, refer to the described technical effects of the method in the first aspect. Details are not described herein again.

According to a third aspect, a communication apparatus is provided. The communication apparatus includes a module, a unit, or a means (means) configured to perform the method in the first aspect or the second aspect. The module, the unit, or the means may be implemented by hardware, may be implemented by software, or may be implemented by hardware executing corresponding software. The hardware or software includes one or more modules or units, for example, a transceiver module and a processing module, corresponding to the foregoing functions. For example, the transceiver module indicates a transceiver function of the communication apparatus, and the processing module is configured to perform a function of the communication apparatus other than the transceiver function.

In a possible design scheme, the transceiver module may include a receiving module and a sending module. The sending module is configured to implement a sending function of the communication apparatus in the third aspect, and the receiving module is configured to implement a receiving function of the communication apparatus in the third aspect.

In a possible design scheme, the communication apparatus in the third aspect may further include a storage module, and the storage module stores a program or instructions. When the processing module executes the program or the instructions, the communication apparatus in the third aspect may be caused to perform the method in the first aspect or the second aspect.

The communication apparatus in the third aspect may be a terminal device or a network device, may be a chip (system) or another part or component disposed in the terminal device or the network device, or may be an apparatus including the terminal device or the network device. This is not limited in this application.

According to a fourth aspect, a communication apparatus is provided, including a processor and a communication interface. The communication interface is configured to communicate with a module outside the communication apparatus. The processor is configured to execute a computer program or instructions, to cause the communication apparatus to perform the method in the first aspect or the second aspect.

According to a fifth aspect, a communication apparatus (for example, the communication apparatus may be a chip or a chip system) is provided. The communication apparatus includes a processor, configured to implement the functions in the first aspect or the second aspect.

In some possible designs, the communication apparatus includes a memory. The memory is configured to store necessary program instructions and/or data.

In a possible design scheme, the processor may be integrated with the memory.

In some possible designs, when the communication apparatus is a chip system, the apparatus may include a chip, or may include a chip and another discrete device.

According to a sixth aspect, a communication apparatus is provided, including a transceiver and a processor. The transceiver is used by the communication apparatus to exchange information with another communication apparatus. The processor executes program instructions to perform the method in the first aspect or the second aspect.

In a possible design scheme, the communication apparatus in the sixth aspect may further include a memory. The memory and the processor may be integrated together, or may be disposed separately. The memory may be configured to store a computer program and/or data in the method in the first aspect or the second aspect.

It should be understood that a corresponding module, unit, or means (means) for implementing the method in the first aspect or the second aspect is included in the fourth aspect to the sixth aspect. The module, the unit, or the means may be implemented by using hardware, software, or by hardware executing corresponding software. The hardware or the software includes one or more modules or units configured to perform the functions in the foregoing methods.

It may be understood that when the communication apparatus in any one of the fourth aspect to the sixth aspect is a chip, the foregoing sending action/function may be understood as output, and the foregoing receiving action/function may be understood as input.

According to a seventh aspect, a computer-readable storage medium is provided. The computer-readable storage medium stores a computer program or instructions. When the computer program or the instructions are run on a communication apparatus, the communication apparatus is caused to perform the method in the first aspect or the second aspect.

According to an eighth aspect, a computer program product including instructions is provided. When the computer program product is run on a communication apparatus, the communication apparatus may be caused to perform the method in the first aspect or the second aspect.

According to a ninth aspect, a communication system is provided, including a terminal device configured to perform the method in the first aspect and a network device configured to perform the method in the second aspect.

### BRIEF DESCRIPTION OF DRAWINGS

FIG. 1 is a schematic flowchart of cell handover;
FIG. 2 is a diagram of a scenario in which a terminal device moves between cells;
FIG. 3 is a diagram of an architecture of a communication system according to an embodiment of this application;
FIG. 4 is a schematic flowchart of a communication method according to an embodiment of this application;
FIG. 5 is a diagram of a cell handover scenario according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

All aspects, embodiments, or features are presented in embodiments of this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

The following first describes related technologies in embodiments of this application.

### Cell handover

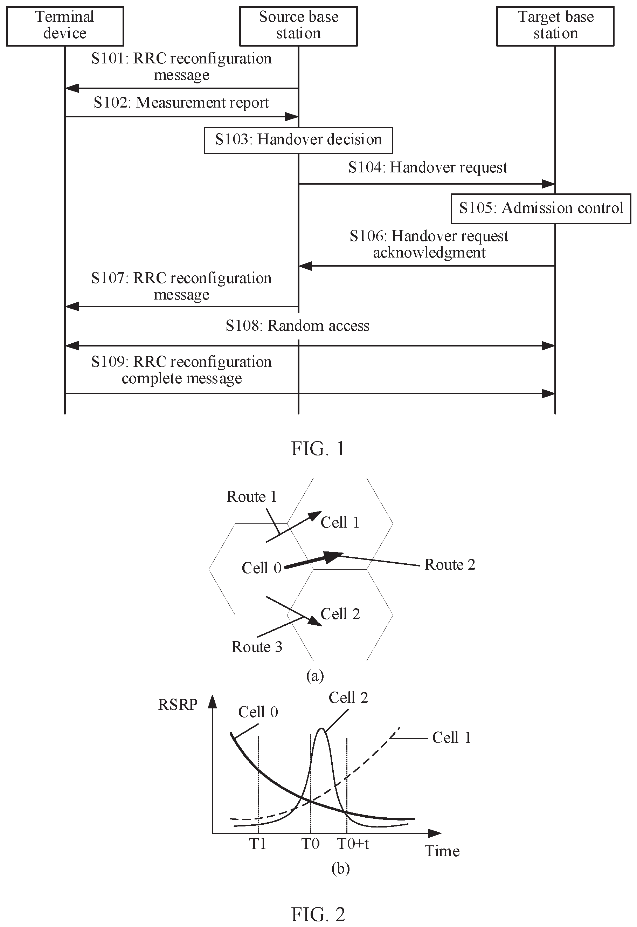

As a terminal device moves, signal quality of a cell that the terminal device currently accesses may deteriorate, and the terminal device needs to be handed over to a cell with better signal quality to obtain services. For a conventional handover procedure, handover of the terminal device is controlled by a network device. To be specific, the network device sends a handover command to indicate a cell to which the terminal device is to be handed over and how to perform the handover. As shown in FIG. 1, after receiving the handover command, the terminal device accesses a target cell based on content included in the handover command. Therefore, a network side needs to obtain a target cell identifier. Specifically, the following handover steps are included.

S101: A source base station sends a radio resource control (radio resource control, RRC) reconfiguration (RRC Reconfiguration) message to the terminal device. Correspondingly, the terminal device receives the RRC reconfiguration message from the source base station.

The source base station sends an RRC reconfiguration message to a terminal device in a connected state, to indicate the terminal device to perform measurement. The RRC reconfiguration message includes parameters such as a measurement object, a reporting configuration, and a measurement identifier.

The reporting configuration defines related configurations of a measurement report, including a reporting evaluation criterion of the measurement report, for example, whether reporting of the measurement report is triggered by a measurement event or is performed periodically. For example, the measurement event may be at least one of: event A1, event A2, event A3, event A4, event A5, event A6, event B1, or event B2. A threshold corresponding to the measurement event is a reference value for determining to enter or leave the event, and a specific value of the threshold is generally configured by the network device.

The following describes these measurement events and corresponding thresholds.

Event A1 indicates that a measurement result of a serving cell is higher than a preset threshold. Assuming that the threshold is Thresh, when inequality A1-1 is satisfied, enter event A1, and when inequality A1-2 is satisfied, leave event A1.

Inequality A1-1 (entering condition): Ms-Hys>Thresh.

Inequality A1-2 (leaving condition): Ms+Hys<Thresh.

Ms is the measurement result of the current serving cell, Hys is a hysteresis parameter for this event. Thresh and Hys may be configured by the network side.

Event A2 indicates that a measurement result of a serving cell is lower than a preset threshold. Assuming that the threshold is Thresh, when inequality A2-1 is satisfied, enter event A2, and when inequality A2-2 is satisfied, leave event A2.

Inequality A2-1 (entering condition): Ms+Hys<Thresh.

Inequality A2-2 (leaving condition): Ms-Hys>Thresh.

Ms is the measurement result of the current serving cell, Hys is a hysteresis parameter for this event. Thresh and Hys may be configured by the network side.

Event A3 indicates that a measurement result of an intra-frequency neighboring cell is higher than a measurement result of a special cell (special cell, SpCell). When inequality A3-1 is satisfied, enter event A3, and when inequality A3-2 is satisfied, leave event A3.

Inequality A3-1 (entering condition): Mn+Ofn+Ocn-Hys>Mp+Ofp+Ocp+Off.

Inequality A3-2 (leaving condition): Mn+Ofn+Ocn+Hys<Mp+Ofp+Ocp+Off.

Mn is the measurement result of the intra-frequency neighboring cell. Ofn is a frequency (or frequency channel number or frequency band) offset of the intra-frequency neighboring cell. Ocn is a cell individual offset (cell individual offset, CIO) of the intra-frequency neighboring cell. Mp is a measurement result of the special cell. Ofp is a frequency (or frequency channel number or frequency band) offset of the special cell. Ocp is a cell individual offset of the special cell. Hys is a hysteresis parameter for this event. Off is an offset parameter for the event. Mn and Mp are obtained in a measurement process, and Ofn, Ocn, Hys, Ofp, Ocp, and Off may all be configured by the network side.

Event A4 indicates that a measurement result of an inter-frequency neighboring cell is higher than a preset threshold. Assuming that the threshold is Thresh, when inequality A4-1 is satisfied, enter event A4, and when inequality A4-2 is satisfied, leave event A4.

Inequality A4-1 (entering condition): Mn+Ofn+Ocn-Hys>Thresh.

Inequality A4-2 (leaving condition): Mn+Ofn+Ocn+Hys<Thresh.

Mn is the measurement result of the inter-frequency neighboring cell. Ofn is a frequency (or frequency channel number or frequency band) offset of the inter-frequency neighboring cell. Ocn is a cell individual offset of the inter-frequency neighboring cell. Hys is a hysteresis parameter for this event. Ofn, Ocn, Hys, and Thresh may be configured by the network side.

Event A5 indicates that a measurement result of a special cell is lower than a first threshold, and a measurement result of a neighboring cell is higher than a second threshold. Assuming that the first threshold is ThreshA51 and the second threshold is ThreshA52, when inequality A5-1 and inequality A5-2 are satisfied, enter event A5, where a sequence of the two entering conditions is not limited, and when at least one of inequality A5-3 or inequality A5-4 is satisfied, leave event A5.

Inequality A5-1 (entering condition 1): Mp+Hys<ThreshA51.

Inequality A5-2 (entering condition 2): Mn+Ofn+Ocn-Hys>ThreshA52.

Inequality A5-3 (leaving condition 1): Mp-Hys>ThreshA51.

Inequality A5-4 (leaving condition 2): Mn+Ofn+Ocn+Hys<ThreshA52.

Mp is the measurement result of the special cell. Mn is the measurement result of the neighboring cell. Ofn is a frequency (or frequency channel number or frequency band) offset of the neighboring cell. Ocn is a cell individual offset of the neighboring cell. Hys is a hysteresis parameter for this event. Ofn, Ocn, Hys, ThreshA51, and ThreshA52 may be configured by the network side.

Event A6 indicates that a measurement result of a neighboring cell is higher than a measurement result of a serving cell. When inequality A6-1 is satisfied, enter event A6, and when inequality A6-2 is satisfied, leave event A6.

Inequality A6-1 (entering condition): Mn+Ocn-Hys>Ms+Ocs+Off.

Inequality A6-2 (leaving condition): Mn+Ocn+Hys<Ms+Ocs+Off.

Ms is the measurement result of the serving cell. Mn the measurement result of the neighboring cell. Ocn is a cell individual offset of the neighboring cell. Ocs is a cell individual offset of the serving cell. Hys is a hysteresis parameter for this event. Off is an offset parameter for this event. Mn and Ms are obtained in a measurement process, and Ocn, Hys, Ocs, and Off may all be configured by the network side.

Event B1 indicates that a measurement result of an inter-RAT neighboring cell is higher than a preset threshold. Assuming that the threshold is Thresh, when inequality B1-1 is satisfied, enter event B1, and when inequality B1-2 is satisfied, leave event B1.

Inequality B1-1 (entering condition): Mn+Ofn-Hys>Thresh.

Inequality B1-2 (leaving condition): Mn+Ofn+Hys<Thresh.

Mn is the measurement result of the inter-RAT neighboring cell. Ofn is a frequency (or frequency channel number or frequency band) offset of the inter-RAT neighboring cell. Hys is a hysteresis parameter for this event. Ofn, Hys, and Thresh may be configured by the network side.

Event B2 indicates that a measurement result of a special cell is lower than a first threshold, and a measurement result of an inter-RAT neighboring cell is higher than a second threshold. Assuming that the first threshold is ThreshB21 and the second threshold is ThreshB22, when inequality B2-1 and inequality B2-2 are satisfied, enter event B2, and when at least one of inequality B2-3 or inequality B2-4 is satisfied, leave event B2.

Inequality B2-1 (entering condition 1): Mp+Hys<ThreshB21.

Inequality B2-2 (entering condition 2): Mn+Ofn+Ocn-Hys>ThreshB22.

Inequality B2-3 (leaving condition 1): Mp-Hys>ThreshB21.

Inequality B2-4 (leaving condition 2): Mn+Ofn+Ocn+Hys<ThreshB22.

Mp is the measurement result of the special cell. Mn is the measurement result of the inter-RAT neighboring cell. Ofn is a frequency (or frequency channel number or frequency band) offset of the inter-RAT neighboring cell. Hys is a hysteresis parameter for this event. Ofn, Ocn, Hys, ThreshB21, and ThreshB22 may be configured by the network side.

The SpCell may be understood as follows: The SpCell is a primary cell (primary cell, PCell) in a master cell group (master cell group, MCG) or a primary secondary cell (primary secondary cell, PSCell) in a secondary cell group (secondary cell group, SCG) for a first terminal device configured with dual connectivity. If dual connectivity is not configured, the special cell is a PCell.

When a measurement result (which may be a measurement result that has undergone processing such as filtering) satisfies an entering condition of a measurement event and this state remains for time-to-trigger (time-to-trigger, TTT), it may be considered that the measurement event is satisfied. The TTT may be configured by the network side, or agreed on in advance. It may be understood that, after an agreement is reached, when a leaving condition of a measurement event is satisfied and this state remains for a period of time, it may also be considered that the measurement event is satisfied.

S102: The terminal device sends a measurement report (Measurement Report) to the source base station. Correspondingly, the source base station receives the measurement report from the terminal device.

After performing measurement on cells based on the RRC reconfiguration message, the terminal device forms a measurement report to report various events to the source base station.

S103: The source base station performs handover decision (Handover Decision).

After receiving the measurement report, the source base station determines, based on the measurement report, to perform cell handover, that is, to perform handover from the source base station to a target base station.

S104: The source base station sends a handover request (Handover Request) to the target base station. Correspondingly, the target base station receives the handover request from the source base station.

S105: The target base station performs admission control (Admission Control).

The target base station determines, based on the handover request, whether to allow access of the terminal device, and if a determining result is that access of the terminal device is allowed, sends a handover request acknowledgment message to the source base station. The handover request acknowledgment includes parameters such as a new cell-radio network temporary identifier (cell-radio network temporary identifier, C-RNTI) and a security-related algorithm of the target base station.

S106: The target base station sends the handover request acknowledgment (Handover Request ACK) to the source base station. Correspondingly, the source base station receives the handover request acknowledgment from the target base station.

S107: The source base station sends an RRC reconfiguration (RRC Reconfiguration) message to the terminal device. Correspondingly, the terminal device receives the RRC reconfiguration message from the source base station.

After receiving the handover request acknowledgment message sent from the target base station, the source base station sends the RRC reconfiguration message (handover command) to the terminal device. Content included in the RRC reconfiguration message is from the handover request acknowledgment in S106. Specifically, in an NR system, the handover command includes related information of the target cell and related configuration parameters required for the terminal device to access the target cell, for example, target cell information (for example, a physical cell identifier (physical cell identifier, PCI) of the target cell and frequency information corresponding to the target cell), a C-RNTI allocated by the target cell to the terminal device, and information about a random access channel (random access channel, RACH) resource (for example, a dedicated RACH resource and/or a common RACH resource) required for accessing the target cell.

S108: The terminal device performs random access to the target base station.

The terminal device initiates random access to the target base station based on the handover command. In an existing handover procedure, the terminal device is disconnected from the source base station, and data receiving and sending of the terminal device are briefly interrupted before the terminal device successfully accesses the target base station.

S109: The terminal device sends an RRC reconfiguration complete (RRC Reconfiguration Complete) message to the target base station. Correspondingly, the target base station receives the RRC reconfiguration complete message from the terminal device.

For the cell handover, the network device determines the target cell based on an RSRP, an SINR, RSRQ, or the like that is of the cell neighboring the current serving cell and that is measured at a moment and reported by the terminal device, and indicates the terminal device to be handed over from the current cell to the target cell.

In addition to the foregoing cell handover procedure, there may be other possible mobility-related procedures, such as cell reselection (cell reselection) and conditional handover (conditional handover, CHO), which are also applicable to the present invention. Details are not described herein.

The foregoing cell handover is still used as an example. In a possible scenario, as shown in (a) of FIG. 2, the current serving cell of the terminal device is cell 0. During movement of the terminal device from cell 0 to cell 1, if there is no interference from cell 2, signal quality (for example, an RSRP) of cell 0 gradually deteriorates, while signal quality of cell 1 gradually improves. In the foregoing handover method, the network device configures a handover event for the terminal device. The terminal device finds, at moment T0, that the configured handover event is satisfied, and reports an RSRP at moment T0. The network device determines, based on the RSRP reported by the terminal device, that the target cell is cell 1, and may indicate the terminal device to be handed over to cell 1.

However, as shown in (b) of FIG. 2, there is a possibility that, due to impact of a physical environment, there is a very narrow area in which signal quality of cell 2 is higher at a junction of cell 0 and cell 1. If the terminal device moves along route 2, at moment T0, an RSRP of cell 2 obtained by the terminal device through measurement is far higher than those of cell 0 and cell 1. Consequently, the network device indicates the terminal device to be handed over to cell 2. However, because the area in which the signal quality of cell 2 is higher is very narrow, as the terminal device continues to move, the terminal device may need to be handed over to cell 1 soon, or may not be handed over to cell 1 in time, resulting in a dropped connection. Such a brief stay in cell 2 or the dropped connection affects user experience and is an undesirable situation during handover.

A similar issue exists for cell reselection. The terminal device may reselect one cell and then soon reselect another cell. Frequent reselection increases power consumption of the terminal device, and affects user experience.

To avoid the foregoing situation in which mobility is suboptimal, an AI/ML-based mobility optimization solution is introduced. For example, the network device predicts, at moment T0, an RSRP of each cell at moment T0+t by using an AI/ML model, determines, based on the predicted RSRP of each cell at moment T0+t, that the target cell should be cell 1, and indicates the terminal device to be handed over to cell 1. However, execution of AI/ML model inference (or training) results in additional computational costs. If the AI/ML model inference (or training) is performed on the terminal device, limited power of the terminal device is consumed, and user experience is affected. If the AI/ML model inference (or training) is performed on the network device, the terminal device may need to upload input data of the AI/ML model (where for training of a supervised AI/ML model, a label and/or ground truth data required for training of the AI/ML model may be further needed). This leads to additional transmission costs.

To address this, embodiments of this application provide a communication method, to reduce additional computational costs and/or transmission costs caused by an AI/ML-based solution.

For ease of understanding of embodiments of this application, the following descriptions are provided before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or agreed in advance. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or sending occasions of these pieces of sub-information may be predefined, for example, predefined according to a protocol; or may be configured by sending configuration information by a transmit-end device to a terminal device. The configuration information may include, for example, but not limited to one or a combination of at least two of RRC signaling, media access control (media access control, MAC) layer signaling, and physical layer signaling. The MAC layer signaling includes, for example, a MAC-control element (control element, CE). The physical (physical, PHY) layer signaling includes, for example, downlink control information (downlink control information, DCI).

Second, numerical references such as first and second in embodiments of this application are merely for differentiation for ease of description, and are not intended to limit the scope of embodiments of this application, for example, for distinguishing between different indication information. For example, first indication information and second indication information are merely for distinguishing between different indication information, and a sequence of the first indication information and the second indication information is not limited. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or an access network device) performs corresponding processing in an objective situation, and are not intended to limit time, and the device (for example, the terminal device or the access network device) is not required to perform a determining action in an implementation; and do not mean any other limitation.

In addition, in embodiments of this application, terms such as "example" or "for example" are used to represent giving an example, an illustration, or a description. Any embodiment or design scheme described with "example" or "for example" in embodiments of this application should not be explained as being more preferred or having more advantages than another embodiment or design scheme. Precisely, use of the terms such as "example" or "for example" is intended to present a related concept in a specific manner for ease of understanding.

Finally, network architectures and service scenarios that are described in embodiments of this application are intended to describe the technical solutions in embodiments of this application more clearly, and do not constitute any limitation on the technical solutions provided in embodiments of this application. A person of ordinary skill in the art can know that as the network architectures evolve and new service scenarios emerge, the technical solutions provided in embodiments of this application are also applicable to similar technical problems.

The following first describes an architecture of a system in embodiments of this application.

All aspects, embodiments, or features are presented in embodiments of this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

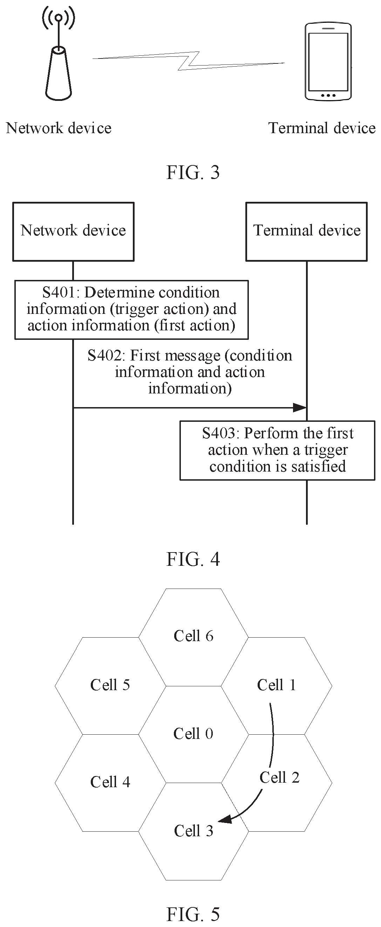

For example, FIG. 3 is a diagram of an architecture of a communication system according to an embodiment of this application. As shown in FIG. 3, the communication system includes a network device and a terminal device. The network device and the terminal device may directly communicate with each other, or may communicate with each other through forwarding by another device. It should be noted that FIG. 3 shows one network device and one terminal device as an example. A quantity of network devices and a quantity of terminal devices are not limited in embodiments of this application.

In embodiments of this application, the network device may also be referred to as an access network (radio access network, RAN) node, an access network device, a RAN entity, an access node, or the like. The network device is located on a network side of the foregoing communication system, to help the terminal device implement wireless access. The network device is a device that has a wireless transceiver function, or may be a chip or a chip system disposed in the device. The network device includes but is not limited to: a base station (base station), an evolved base station (evolved NodeB, eNodeB), an access point (access point, AP), a transmission reception point (transmission reception point, TRP), a next generation base station (next generation NodeB, gNB), a next generation base station in a 6G mobile communication system, a base station in a future mobile communication system, an access node in a Wi-Fi system, or the like. The network device may be a macro base station, a micro base station, an indoor base station, a relay node or a donor node, an open radio access network (open radio access network, ORAN), or a radio controller in a centralized radio access network (centralized radio access network, CRAN) scenario. Optionally, the RAN node may alternatively be a server, a wearable device, a vehicle, a vehicle-mounted device, or the like. For example, the access network device in a V2X technology may be a roadside unit (roadside unit, RSU). All or some functions of the network device in this application may alternatively be implemented through a software function running on hardware, or implemented through a virtualized function instantiated on a platform (for example, a cloud platform). The network device in this application may alternatively be a logical node, a logical module, or software that can implement all or some functions of the network device.

In another possible scenario, a plurality of RAN nodes coordinate to assist the terminal device in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

A form of the network device is not limited in embodiments of this application. An apparatus for implementing a function of the network device may be the network device, or may be an apparatus, for example, a chip system, that can support the network device in implementing the function. The apparatus may be mounted in the network device or used in conjunction with the network device.

The terminal device in embodiments of this application is a terminal that accesses the foregoing communication system and has a wireless transceiver function, or a chip or a chip system that may be disposed in the terminal. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU with a terminal function, or the like. The terminal device in this application may be alternatively a vehicle-mounted module, a vehicle-mounted assembly, a vehicle-mounted part, a vehicle-mounted chip, or a vehicle-mounted unit that is built in a vehicle as one or more parts or units. The vehicle may use the vehicle-mounted module, the vehicle-mounted assembly, the vehicle-mounted part, the vehicle-mounted chip, or the vehicle-mounted unit that is built in the vehicle, to implement a method provided in this application.

A device form of the terminal is not limited in embodiments of this application. An apparatus configured to implement a function of the terminal device may be a terminal device, or may be an apparatus that can support the terminal device in implementing the function, for example, a chip system. The apparatus may be mounted in a terminal device or used in conjunction with the terminal device. In this embodiment of this application, the chip system may include a chip, or may include a chip and another discrete component.

In embodiments of this application, an AI/ML module may be deployed in the terminal device and the network device, and the AI/ML module is a module having an artificial intelligence/machine learning computing capability. When the AI/ML module is deployed in a communication device or a communication apparatus, the communication device or the communication apparatus may perform processing such as model training and model inference based on an AI model. When the method in embodiments of this application is applied to a 5G system, the AI/ML module may be located in a RAN device (or located in a CU/DU in a case of a split architecture), may be located in a terminal device or a device (for example, a server) associated with the terminal device, may be independently a network element entity RAN intelligent controller (RAN intelligent controller, RIC) module, or may be independently or non-independently located in a core network.

It should be noted that the solutions in embodiments of this application may also be applied to another communication system, and a corresponding name may also be replaced with a name of a corresponding function in the another communication system.

The following describes in detail the communication method provided in embodiments of this application with reference to FIG. 4 and FIG. 5.

For example, FIG. 4 is a schematic flowchart of a communication method according to an embodiment of this application. Communication between the network device and the terminal device shown in FIG. 3 is used as an example for description. Certainly, an action of the terminal device in the method may alternatively be performed by an apparatus or a module in the terminal device, for example, a chip, a processor, or a processing unit in the terminal device. An action of the network device in the method may alternatively be performed by an apparatus or a module in the network device, for example, a chip, a processor, or a processing unit in the network device. This is not specifically limited in this embodiment of this application.

As shown in FIG. 4, the communication method includes the following steps.

S401: A network device determines condition information and action information.

S402: The network device sends a first message to the terminal device. Correspondingly, the terminal device receives the first message from the network device.

The first message includes the condition information and the action information. In other words, the condition information and the action information are carried in the first message for sending.

Optionally, the first message may be an RRC message, a MAC-CE, or the like. This is not limited in this embodiment of this application.

S403: When a trigger condition is satisfied, the terminal device performs a first action.

The following separately describes S401 and S403.

For S401:
in this embodiment of this application, the condition information indicates a trigger condition for the terminal device to perform the first action, and the action information indicates the first action. The first action is associated with mobility. The mobility is used to represent a mobility event such as cell handover or cell reselection that occurs during movement of the terminal device.

When the first action is associated with cell handover, the network device may use the handover method shown in FIG. 1 to learn of, after collecting statistics over a period of time, a situation in which it is determined based on a current handover method that cell handover is suboptimal or has poor performance, and determine and configure the trigger condition and the first action based on the statistics. A condition or a cause of the situation in which it is determined based on the current handover method that the cell handover is suboptimal or has poor performance may be represented by configuring the trigger condition. The situation in which the cell handover is suboptimal or has poor performance can be avoided by configuring the first action. In this embodiment of this application, to avoid the situation in which the cell handover is suboptimal or has poor performance, AI/ML-based mobility optimization enhancement is enabled when the condition or the cause that may lead to the situation in which the cell handover is suboptimal or has poor performance occurs. Cell handover decision is related to an AI/ML model inference or prediction result, and an implementation of the AI/ML model inference or prediction is related to an execution result of the first action. Otherwise, the AI/ML-based mobility optimization enhancement is not enabled, to reduce additional computational costs and/or transmission costs caused by an AI/ML-based solution. Similarly, when the first action is associated with cell reselection, the network device may also determine, through statistics collection (where statistics may be collected by the terminal device and reported to the network device for summarization) and configure the trigger condition and the first action for the terminal device. When a condition or cause of a situation in which the cell reselection is suboptimal or has poor performance occurs, AI/ML-based mobility optimization enhancement is enabled. Cell reselection decision is related to an AI/ML model inference or prediction result. Details are not described herein. It should be understood that the configured first action varies with a deployment location of an AI/ML model. For details, refer to the following related descriptions.

The trigger condition may include at least one of the following: The terminal device is at a preset location, a movement trajectory of the terminal device is a preset trajectory, CSI measured by the terminal device is preset CSI, a speed of the terminal device reaches a preset speed, time of the terminal device reaches preset time, the terminal device detects a cell on a preset frequency band or frequency channel number through measurement, or the terminal device satisfies or completes a preset event. The terminal device may perform the first action provided that the foregoing trigger condition is satisfied. It should be understood that different trigger conditions may correspond to different first actions, and one first action may correspond to a plurality of trigger conditions. This is not limited herein.

That the terminal device is at the preset location may mean that the terminal device moves to a preset location point or a preset location range. In other words, when the terminal device is at the preset location or within the preset location range during movement, the terminal device performs the first action. The preset location range may be represented by a geographical area defined by several coordinates, or may be represented by using center coordinates plus a radius or the like. This is not limited herein. In this embodiment of this application, the preset location may be a physical location, a relative location, a location represented by a synchronization signal block (synchronization signal block, SSB), or the like. This is not limited herein. It should be understood that, during determining, based on the location of the terminal device, whether to trigger the first action, an error between an actual location and the preset location of the terminal device needs to be considered. In other words, if the error between the actual location and the preset location of the terminal device is within a preset error range, the first action may be performed.

The movement trajectory of the terminal device satisfies the preset trajectory: The movement trajectory of the terminal device may be a movement trajectory along which the terminal device moves at a granularity of the foregoing location or a granularity of cells. In an example in which the position is used as the granularity, the movement trajectory of the terminal device may be a movement trajectory formed by several location coordinates that the terminal device passes through during movement, and the movement trajectory of the terminal device satisfies a preset movement trajectory. In other words, a trajectory map formed by the location coordinates is consistent with a preset location trajectory map. In an example in which the cell is used as the granularity, that the movement trajectory of the terminal device satisfies the preset trajectory may be that the terminal device enters a preset cell, or leaves a preset cell, or a sequence of cells that the terminal device passes through is a preset cell sequence. The sequence of the cells that the terminal device passes through may be a cell sequence formed by all or some cells that the terminal device passes through during movement after the terminal device is powered on and performs access. For example, the terminal device moves from cell 1 to cell 0 and then to cell 5. In this case, the sequence of the cells that the terminal device passes through may be represented as cell 1 -> cell 0 -> cell 5. For example, if the preset cell sequence is cell 1 -> cell 0 -> cell 3, and a sequence of cells that the terminal device actually passes through is the preset cell sequence, it is considered that the movement trajectory satisfies the trigger condition. In other words, if the movement trajectory generated by the terminal device during movement is consistent with the preset movement trajectory, the terminal device may perform the first action.

That the CSI measured by the terminal device is the preset CSI may mean that the CSI obtained by the terminal device through measurement based on a reference signal (for example, a CSI-reference signal (reference signal, RS)) during movement is consistent with the preset CSI, or may be understood as that a CSI measurement (or channel measurement) event is satisfied. The preset CSI may be a characteristic quantity that can be used to represent a channel state, for example, a preset (original) channel matrix, a preset precoding matrix, or a mathematical transformation result of the preset precoding matrix. In this embodiment of this application, the network device may configure one or more pieces of preset CSI in a form of a table or a sequence. In this way, the terminal device may match the CSI obtained through measurement with the one or more pieces of preset CSI, and may perform the first action if the CSI obtained through measurement matches the preset CSI. It should be understood that when the terminal device is at different locations, corresponding CSI obtained through measurement is different. Therefore, there is a mapping relationship between the CSI measured by the terminal device and the location of the terminal device, and the CSI measured by the terminal device may correspond to the location of the terminal device to some extent. In other words, the CSI measured by the terminal device may be used to represent the location or the movement trajectory of the terminal device, and the preset CSI may be used to represent a location of the terminal device that affects the cell handover decision. In addition, there may be a specific error between the CSI measured by the terminal device and the preset CSI. If the error is within the preset error range, it may be considered that the CSI measured by the terminal device is the preset CSI.

That the speed of the terminal device reaches the preset speed may mean that a movement speed of the terminal device reaches the preset speed, and/or that acceleration of the terminal device reaches preset acceleration. When an optimal handover/reselection location is determined, the movement speed and/or the acceleration of the terminal device change/changes, and a handover or reselection moment also changes. Therefore, the cell handover moment or the reselection moment may be determined by determining the speed of the terminal device.

Trigger conditions related to the location, the movement trajectory, the measured CSI, and the speed of the terminal device may be referred to as space-type trigger conditions.

That the time of the terminal device reaches the preset time may mean that a current clock of the terminal device reaches a preset time point or is within a preset time period, and the preset time may be represented by an absolute value or a relative value of time. Service characteristics of cells may vary at different time. This may cause different handover/reselection result performance. Therefore, different handover/reselection configurations may be needed. The configurations may include whether to enable the AI/ML-based mobility optimization enhancement. Therefore, the handover/reselection configuration may be determined by determining the time of the terminal device. In other words, the preset time may be a time period or a time point at which handover/reselection result performance differs and whether to enable the AI/ML-based mobility optimization enhancement is configured. Such a type of trigger condition may be referred to as a time-type trigger condition.

The terminal device detects the cell on the preset frequency band or frequency channel number through measurement: Because cell coverage of different frequency bands/frequency channel numbers may be different, cells on some frequency bands/frequency channel numbers may cause a cell handover/reselection result to be suboptimal during the cell handover/reselection decision. Therefore, the cell on the preset frequency band or frequency channel number may be a cell that affects the handover/reselection decision and that causes a suboptimal handover/reselection result. In other words, during cell measurement, the terminal device may perform the first action when detecting the cell on the preset frequency band or frequency channel number through measurement. It should be understood that there may be a plurality of cells on a same frequency band or frequency channel number. Such a type of trigger condition may be referred to as a frequency domain-type trigger condition.

The terminal device satisfies or completes the preset event: The preset event may include a measurement event and/or a mobility event. The mobility event may include the cell handover or reselection. For example, the measurement event may include channel measurement and cell measurement. For a cell measurement configuration, refer to a measurement configuration sent by the source base station to the terminal device in S101. For the channel measurement event, refer to explanations for the CSI measurement. For the cell measurement event, refer to explanations in S101. The mobility event related to the cell handover may include execution time of the cell handover or reselection, a cell handover success, a cell handover failure, ping-pong handover, short-time access to a cell, and whether a change in quality of experience (quality of experience, QoE) (including a rate and/or a delay) before and after the handover is greater than (less than or equal to) a QoE change threshold, whether a change (a change value or a change rate) in a measurement result of at least one cell is greater than (less than or equal to) a measurement change threshold, a reselection success, a reselection failure, frequent reselection, or the like. It should be understood that, that the terminal device satisfies or completes the preset event may be replaced with the following: The terminal device determines that the preset event occurs. Such a type of trigger condition may be referred to as an event-type trigger condition.

In this embodiment of this application, the QoE change threshold, the measurement change threshold, and another threshold may be configured by the network device for the terminal device, or may be locally configured by the terminal device, or may be determined by the network device and the terminal device through negotiation.

It should be understood that the foregoing several trigger conditions are provided as examples. In addition to the foregoing trigger conditions, another condition that may be used to trigger execution of the first action may be further included, to avoid a situation in which the cell handover or reselection is suboptimal. For example, the terminal device detects a preset cell through measurement (where the preset cell is a cell that affects the cell handover or reselection decision), or the terminal device determines, based on output of a preset model, that a preset condition is satisfied (where the preset model may be configured by the network device). This is not limited herein. In addition, the condition information may include at least one of the foregoing trigger conditions. When a plurality of trigger conditions are configured, the terminal device may perform the first action when all the configured trigger conditions are satisfied, or may perform the first action when several specific trigger conditions and/or a specific quantity of the trigger conditions are satisfied (for example, 80% of the trigger conditions are satisfied). This is not limited herein.

In this embodiment of this application, to avoid the situation in which the cell handover or reselection is suboptimal, the AI/ML model used for mobility optimization may be deployed on a network device side, or may be deployed on a terminal device side. The first action configured by the network device varies with a model deployment location.

In a scenario in which the model used for mobility optimization is deployed on the network device side, in a possible design scheme, the first action may include at least one of the following: collecting target data, stopping collecting the target data, or reporting the target data. In other words, in this scenario, the terminal device performs actions such as data collection and reporting. The target data is used by the network device to perform mobility-related model training or inference, and the target data may include data used for model input and/or data used for model training.

The data used for model input may be used as input data for model training, or may be used as input data for model inference. The data used for model input may include at least one of the following: a measurement result of a current serving or camped cell, a measurement result of a cell neighboring the current serving or camped cell, CSI of the current serving cell, a motion feature of the terminal device, service information of the terminal device, or time information of the terminal device (or equivalently, time information of the network device). The current serving cell is a cell accessed by the terminal device when the terminal device is in a connected state, and the current camped cell is a cell on which the terminal device camps when the terminal device is in an idle state. The current serving or camped cell and a cell in which the terminal device receives the first message may or may not be a same cell. The measurement result of the current serving or camped cell and the measurement result of the cell neighboring the current serving or camped cell may include one or more of parameters such as an RSRP, an SINR, and RSRQ. This is not limited herein. The motion feature of the terminal device may include features such as a location, a speed, and acceleration of the terminal device. This is not limited herein. The service information of the terminal device may include a QoE requirement (for example, a requirement such as a service transmission rate or transmission delay) of the terminal device. The time information of the terminal device may be a time point or a time period, and may be represented by relative time or absolute time. This is not limited herein.

It should be understood that several types of data used for mobility-related model input are shown above as examples. In addition, other data that may be used for the model to perform cell handover or reselection determining may be further included, for example, historical cell handover/reselection information of the terminal device. This is not limited herein. In addition, the data used for model input in this embodiment of this application may be one-dimensional data, or may be data formed in a plurality of dimensions such as time, space, and a frequency domain. This is not limited herein.

The data used for model training may include label data and/or ground truth data used for model training. During the model training, the data used for model training may be compared with data that is output during the model training, and a trainable parameter (for example, a weight parameter in an artificial neural network) in the model may be adjusted based on a comparison result by using a method such as back propagation or gradient descent, to obtain a model (an inference model) used for inference.

The data used for model training may include at least one of the following: execution time of the cell handover or reselection, a cell handover success, a cell handover failure, ping-pong handover, short-time access to a cell, a change in QoE before and after the cell handover, a change in a measurement result of at least one cell, a measurement result of the current serving or camped cell at a future moment, a measurement result of the cell neighboring the current serving or camped cell at a future moment, a reselection success, a reselection failure, or frequent reselection. In a possible implementation, the cell handover success, the cell handover failure, the ping-pong handover, the short-time access to the cell, the reselection success, the reselection failure, and the frequent reselection respectively indicate that the cell handover success, the cell handover failure, the ping-pong handover, the short-time access to the cell, the reselection success, the reselection failure, and the frequent reselection occur or happen, and are label data used for model training, and may be represented by 0 or 1. For example, 0 indicates the cell handover success, and 1 indicates the cell handover failure. The execution time of the cell handover or reselection, the change in the QoE before and after the cell handover, the change in the measurement result of the at least one cell (for example, a serving cell, a camped cell, or a neighboring cell), the measurement result of the current serving or camped cell at the future moment, or the measurement result of the cell neighboring the current serving or camped cell at the future moment is ground truth data used for model training.

It should be noted that there may be a binding relationship between data used for model training and time. For example, cell handover is performed at moment t1, and a handover success result is obtained; and cell handover is performed at moment t2, and a handover failure result is obtained. Herein, moment t1 and a handover success constitute one set of data, and moment t2 and a cell handover failure constitute one set of data. Similarly, there may be a binding relationship between the data used for model training and a cell. For example, handover from cell 1 to cell 2 is performed, and a handover success result is obtained; and handover from cell 1 to cell 3 is performed, and a handover failure result is obtained. Herein, cell 1, cell 2, and a handover success constitute one set of data, and cell 1, cell 3, and a handover failure constitute another set of data.

In a possible implementation, the time information of the terminal device may be used as model input data, or may be used as label data and/or ground truth data for model training. In an example, the time information (for example, first time) is used as the model input data, and model prediction output may be a success probability of cell handover, that is, a prediction result may indicate a success probability of the cell handover at the first time. If the time information (for example, the execution time of the cell handover or reselection) is used as the ground truth data for model training, indicating that the model may be used to predict appropriate time for the cell handover or reselection, and performing the cell handover or reselection at the time can achieve an optimal expected effect.

When the data used for model input is input data used for model training, the input data used for model training and the data used for model training may constitute training data, for example, (***x**ᵢ, **y**ᵢ*), where i is a data sequence number, ***x**ᵢ* is the input data used for model training, and ***y**ᵢ* is a ground truth value and/or label data used for model training. In this embodiment of this application, a correspondence between the data used for model training and the data used for model input that constitute the training data may be explicitly or implicitly indicated. This is not limited herein. For example, each piece of input data used for model training corresponds to one first index, each piece of data used for model training corresponds to one second index, and two pieces of data that constitute the training data may be indicated by using the first index and the second index.

When the first action is collecting the target data, the network device may further configure, for the terminal device, an end condition for collecting the target data. The end condition is included in the action information. The end condition may be at least one of the following: A data volume of the collected target data reaches a preset data volume, collection duration of the target data reaches preset collection duration, or the terminal device satisfies a trigger condition corresponding to stopping collecting the target data. In other words, if the terminal device determines, during collection of the target data, that the foregoing end condition is satisfied, the terminal device completes the collection of the target data. Further, the terminal device may report the collected target data. Optionally, the end condition may alternatively be determined by the network device and the terminal device through negotiation, or may be locally configured by the terminal device. This is not limited herein.

When the first action is stopping collecting the target data or reporting the target data, in a possible case, the trigger condition may include a condition for triggering collecting the target data and a condition for triggering stopping collecting the target data or reporting the target data. In other words, the terminal device may start to collect the target data when the condition for triggering collecting the target data is satisfied, and stop collecting the target data or report the target data when a condition for triggering stopping collecting the target data or reporting the target data is satisfied. In this case, stopping collecting the target data may be clearing the collected target data, retaining the collected target data, or reporting the collected target data; and reporting the target data is sending the collected target data to the network device or another device (for example, a server). The another device may be determined by the network device through configuration, agreed on by both parties in advance, or determined by the terminal device. In another possible case, the network device may configure the terminal device to periodically collect the target data. When the trigger condition is satisfied, stopping collecting the target data may be clearing the collected target data, retaining the collected target data, or reporting the collected target data; and reporting the target data may be reporting target data collected in a latest periodicity. Optionally, a related configuration for periodic collection may alternatively be determined by the network device and the terminal device through negotiation, agreed on in advance, or locally configured by the terminal device. This is not limited herein. It should be understood that, when the first action is stopping collecting the target data or reporting the target data, a start condition and the end condition for collecting the target data are not limited in this embodiment of this application.

It should be noted that a cell in which the terminal device reports the target data and a cell in which the terminal device receives the first message may or may not be a same cell. This is not limited in this embodiment of this application. The cell related to the target data may or may not include the cell in which the target data is reported or the cell in which the first message is received. This is not limited in this embodiment of this application. In addition, a network device that receives the target data reported by the terminal device and the network device that sends the first message to the terminal device may or may not be a same network device. This is not limited in this embodiment of this application.

In a scenario in which the model used for mobility optimization is deployed on the terminal device side, in a possible design scheme, the first action may include at least one of the following: performing the mobility-related model inference, performing the mobility-related model training, or obtaining mobility-related prediction data.

The mobility-related model inference is performed (by an inference model) to predict data (that is, prediction data) related to mobility such as one or more times of future cell handover or reselection. Input data used for model inference may include data that is collected by the terminal device and that is used for model input in the foregoing design scheme, or may include other data determined by the terminal device. Details are not described herein. Performing the mobility-related model training is performing, on a configuration model, training related to mobility such as cell handover or reselection, to obtain a model for performing the mobility-related inference. The data used for model training may include data used for model input and truth value and/or label data used for model training that are collected by the terminal device in the foregoing design scheme, or may include other data determined by the terminal device. Details are not described herein. Obtaining the mobility-related prediction data may be the terminal device locally obtaining the prediction data obtained through mobility-related model inference, or may be the terminal device obtaining the prediction data from another device such as a server.

It should be understood that the terminal device may perform AI/ML model inference or training on the terminal device, or may perform AI/ML model inference or training on a device (for example, a server) associated with the terminal device. This is not limited herein.

In this embodiment of this application, the prediction data may include at least one of the following: a target cell for the cell handover or reselection, a success probability of the cell handover or reselection, signal quality of the current serving or camped cell, signal quality of at least one cell neighboring the current serving or camped cell, or time for the cell handover or reselection. The signal quality of the cell may be an RSRP, RSRQ, an SINR, or the like.

It should be understood that in this embodiment of this application, there may be one or more mobility-related models, and different models correspondingly implement different functions. For example, model 1 is used to predict a target cell for the cell handover or reselection, and model 2 is used to predict time for the cell handover or reselection. Different models may correspond to different identities. The network device may indicate, by using an identifier (identifier, ID), a model used by the terminal device to complete the first action, or the network device may indicate, by using a function, the model used by the terminal device to complete the first action. This is not limited herein.

For S403:
after obtaining the trigger condition and the first action, the terminal device determines, in an operating process, whether the trigger condition is satisfied, and if the trigger condition is satisfied, performs the first action, or if the trigger condition is not satisfied, does not perform the first action.

In a scenario in which the model used for mobility optimization is deployed on the network device side, that is, the first action is at least one of collecting the target data, stopping collecting the target data, or reporting the target data, when the trigger condition is satisfied, the terminal device may collect data used by the network device to perform cell handover or reselection-related inference or training, so that the network device implements the AI/ML-based mobility optimization enhancement.

In a scenario in which the model used for mobility optimization is deployed on the terminal device side, that is, the first action is at least one of performing the mobility-related model inference, performing the mobility-related model training, or obtaining the mobility-related prediction data, when the trigger condition is satisfied, the terminal device may perform the AI/ML-based mobility optimization enhancement based on the collected data.

For example, the trigger condition is that a sequence of cells that the terminal device passes through is cell 1 -> cell 2 -> cell 3; as shown in FIG. 5, the current serving cell of the terminal device is cell 3; cells neighboring the current serving cell include cell 0, cell 2, and cell 4; and the first action is collecting an RSRP of the current serving cell and RSRPs of cell 0 and cell 4 neighboring the current serving cell. Therefore, when the terminal device determines that the sequence of the cells that the terminal device passes through is cell 1 -> cell 2 -> cell 3, the terminal device starts to measure and collect RSRPs of cell 3, cell 0, and cell 4, ends data collection when preset collection duration expires, and reports the collected RSRPs of cell 3, cell 0, and cell 4 to the network device, so that the network device performs model training or inference based on the RSRPs of cell 3, cell 0, and cell 4, for example, predicts a target cell to which the terminal device is to be handed over next time during movement, and indicates the target cell to the terminal device.

Based on the communication method shown in FIG. 4, the network device configures, for the terminal device by using the first message, the first action related to mobility (for example, cell handover or reselection) and the trigger condition for performing the first action, so that the terminal device can perform the first action when the trigger condition is satisfied. Therefore, in a scenario of AI/ML-based mobility optimization, when it is determined based on a current handover method that the cell handover or reselection is suboptimal (where the trigger condition is set based on a cause or a condition that may lead to the suboptimal cell handover or reselection), the AI/ML may be used to enhance the cell handover or reselection, to improve handover or reselection performance, so that computational costs and/or data transmission costs caused by model training or inference in another cell handover or reselection scenario in which AI/ML-based mobility optimization does not need to be performed can be reduced.

It may be understood that the "cell" mentioned in embodiments of this application may be replaced with a "sector" or a "beam".

It may be understood that, in the foregoing embodiments, the methods and/or steps implemented by the network device may alternatively be implemented by a part (for example, a processor, a chip, a chip system, a circuit, a logical module, or software) that can be used in the network device, and the methods and/or steps implemented by the terminal device may alternatively be implemented by a part (for example, a processor, a chip, a chip system, a circuit, a logical module, or software) that can be used in the terminal device.

The foregoing mainly describes the solutions provided in this application. Correspondingly, this application further provides a communication apparatus. The communication apparatus is configured to implement various methods in the foregoing method embodiments. The communication apparatus may be the network device in the foregoing method embodiments, an apparatus including the network device, or a part that can be used in the network device, for example, a chip or a chip system. Alternatively, the communication apparatus may be the terminal device in the foregoing method embodiments, or an apparatus including the terminal device, or a part that can be used in the terminal device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. There may be another division manner in an actual implementation.

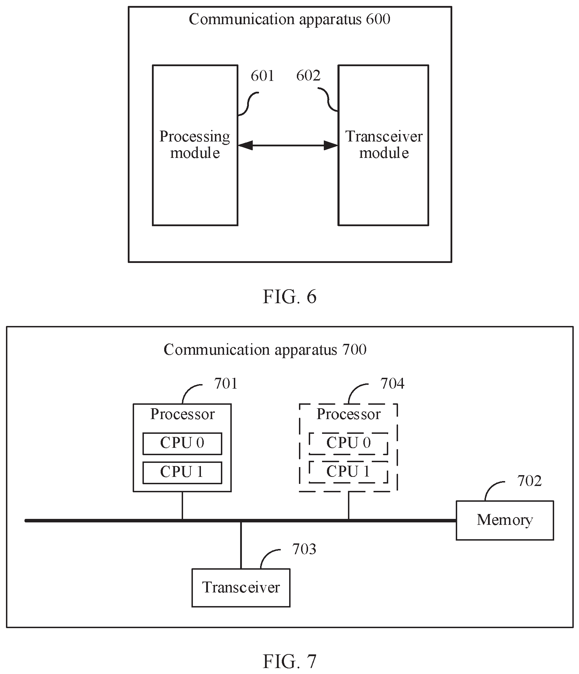

For example, the communication apparatus is the network device or the terminal device in the foregoing method embodiments. FIG. 6 is a diagram of a structure of a communication apparatus according to an embodiment of this application. As shown in FIG. 6, the communication apparatus 600 includes a processing module 601 and a transceiver module 602. The processing module 601 is configured to perform a processing function of the network device or the terminal device in the foregoing method embodiments. The transceiver module 602 is configured to perform the transceiver function of the network device or the terminal device in the foregoing method embodiments.

All related content of the steps in the foregoing method embodiments may be cited in function descriptions of corresponding functional modules. Details are not described herein again.

The communication apparatus 600 provided in this embodiment can perform the foregoing method. Therefore, for technical effects that can be achieved by the communication apparatus 600, refer to the foregoing method embodiments. Details are not described herein again.

In a possible design scheme, in this embodiment of this application, the transceiver module 602 may include a receiving module and a sending module (not shown in FIG. 6). The transceiver module is configured to implement a sending function and a receiving function of the communication apparatus 600.

In a possible design scheme, the communication apparatus 600 may further include a storage module (not shown in FIG. 6), and the storage module stores a program or instructions. When the processing module 601 executes the program or the instructions, the communication apparatus 600 is enabled to perform a function of the network device or the terminal device in the method shown in FIG. 4.

It should be understood that the processing module 601 in the communication apparatus 600 may be implemented by a processor or a processor-related circuit component, and may be a processor or a processing unit; and the transceiver module 602 may be implemented by a transceiver or a transceiver-related circuit component, and may be a transceiver or a transceiver unit.

For example, FIG. 7 is a diagram of a structure of another communication apparatus according to an embodiment of this application. The communication apparatus may be a network device or a terminal device, or may be a chip (system) or another part or component that can be disposed in the network device or the terminal device. As shown in FIG. 7, the communication apparatus 700 may include a processor 701. In a possible design scheme, the communication apparatus 700 may further include a memory 702 and/or a transceiver 703. The processor 701 is coupled to the memory 702 and the transceiver 703, for example, may be connected to the memory 702 and the transceiver 703 through a communication bus.

The following describes parts of the communication apparatus 700 in detail with reference to FIG. 7.

The processor 701 is a control center of the communication apparatus 700, and may be one processor, or may be a general term of a plurality of processing elements. For example, the processor 701 is one or more central processing units (central processing units, CPUs), may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

In a possible design scheme, the processor 701 may perform various functions of the communication apparatus 700 by running or executing a software program stored in the memory 702 and invoking data stored in the memory 702.

In a specific implementation, in an embodiment, the processor 701 may include one or more CPUs, for example, CPU 0 and CPU 1 shown in FIG. 7.

In a specific implementation, in an embodiment, the communication apparatus 700 may alternatively include a plurality of processors, for example, the processor 701 and a processor 704 shown in FIG. 7. Each of the processors may be a single-core processor (single-CPU), or may be a multi-core processor (multi-CPU). The processor herein may be one or more devices, circuits, and/or processing cores configured to process data (for example, computer program instructions).

The memory 702 is configured to store a software program for performing the solutions of this application, and the processor 701 controls execution of the software program. For a specific implementation, refer to the foregoing method embodiments, and details are not described herein again.

In a possible design scheme, the memory 702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 702 may be integrated with the processor 701, or may exist independently, and is coupled to the processor 701 through an interface circuit (not shown in FIG. 7) in the communication apparatus 700. This is not specifically limited in this embodiment of this application.

The transceiver 703 is configured to communicate with another communication apparatus. For example, the communication apparatus 700 is a terminal device, and the transceiver 703 may be configured to communicate with an access network device or communicate with another terminal device. For another example, the communication apparatus 700 is a network device, and the transceiver 703 may be configured to communicate with a terminal device or communicate with another network device.

In a possible design scheme, the transceiver 703 may include a receiver and a transmitter (not separately shown in FIG. 7). The receiver is configured to implement a receiving function, and the transmitter is configured to implement a sending function.

In a possible design scheme, the transceiver 703 may be integrated with the processor 701, or may exist independently, and is coupled to the processor 701 through an interface circuit (not shown in FIG. 7) of the communication apparatus 700. This is not specifically limited in this embodiment of this application.

It should be noted that the structure of the communication apparatus 700 shown in FIG. 7 does not constitute a limitation on the communication apparatus. An actual communication apparatus may include more or fewer parts than those shown in the figure, combine some parts, or have different part arrangement.

In addition, for technical effects of the communication apparatus 700, refer to the technical effects of the method in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of the foregoing embodiments may be implemented by using software, hardware, firmware, or any combination thereof. When a software program is used to implement embodiments, all or some of the embodiments may be implemented in a form of a computer program product. The computer program product includes one or more computer instructions. When the computer program instructions are loaded and executed on a computer, all or some of procedures or functions according to embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and conciseness of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, technical solutions of this application essentially, or the part contributing to the conventional technology, or some of the technical solutions may be implemented in a form of a software product. The computer software product is stored in a storage medium, and includes a plurality of instructions for instructing a computer device (which may be a personal computer, a server, an access network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art can understand and implement another variation of the disclosed embodiments by viewing the accompanying drawings, disclosure, and the accompanying claims. In the claims, "comprising" (comprising) does not exclude another component or another step, and "a" or "one" does not exclude a case of "a plurality of". A single processor or another unit may implement several functions enumerated in the claims. Some measures are recited in dependent claims that are different from each other, but this does not mean that these measures cannot be combined to produce a better effect.

Although this application is described with reference to specific features and embodiments thereof, it is clear that various modifications and combinations may be made to this application without departing from the spirit and scope of this application. Correspondingly, the specification and the accompanying drawings are merely example descriptions of this application defined by the appended claims, and are considered as covering any of or all modifications, variations, combinations or equivalents within the scope of this application. It is clear that a person skilled in the art can make various modifications and variations to this application without departing from the spirit and scope of this application. In this way, this application is intended to cover these modifications and variations of this application, provided that these modifications and variations fall within the scope of the claims of this application and equivalent technologies thereof.

## Claims

1. A communication method, wherein the method comprises:
receiving a first message, wherein the first message comprises condition information and action information, the condition information indicates a trigger condition for a terminal device to perform a first action, the action information indicates the first action, the first action is associated with mobility, and the trigger condition comprises at least one of the following: the terminal device is at a preset location, a movement trajectory of the terminal device is a preset trajectory, channel state information CSI measured by the terminal device is preset CSI, a speed of the terminal device reaches a preset speed, time of the terminal device reaches preset time, the terminal device detects a cell on a preset frequency band or frequency channel number through measurement, or the terminal device satisfies or completes a preset event; and
performing the first action when the trigger condition is satisfied.

2. A communication method, wherein the method comprises:
determining condition information and action information, wherein the condition information indicates a trigger condition for a terminal device to perform a first action, the action information indicates the first action, the first action is associated with mobility, and the trigger condition comprises at least one of the following: the terminal device is at a preset location, a movement trajectory of the terminal device is a preset trajectory, channel state information CSI measured by the terminal device is preset CSI, a speed of the terminal device reaches a preset speed, time of the terminal device reaches preset time, the terminal device detects a cell on a preset frequency band or frequency channel number through measurement, or the terminal device satisfies or completes a preset event; and
sending a first message, wherein the first message comprises the condition information and the action information.

3. The method according to claim 1 or 2, wherein the preset event comprises a measurement event and/or a mobility event, and the mobility event comprises cell handover or reselection.

4. The method according to any one of claims 1 to 3, wherein the first action comprises at least one of the following: collecting target data, stopping collecting the target data, or reporting the target data, wherein the target data is used by a network device to perform mobility-related model training or inference.

5. The method according to claim 4, wherein the target data comprises data used for model input and/or data used for model training.

6. The method according to claim 5, wherein the data used for model input comprises at least one of the following: a measurement result of a current serving or camped cell, a measurement result of a cell neighboring the current serving or camped cell, CSI of the current serving cell, a motion feature of the terminal device, service information of the terminal device, or time information of the terminal device.

7. The method according to claim 5 or 6, wherein the data used for model training comprises at least one of the following: execution time of the cell handover or reselection, a cell handover success, a cell handover failure, ping-pong handover, short-time access to a cell, a change in quality of experience QoE before and after the cell handover, a change in a measurement result of at least one cell, a measurement result of the current serving or camped cell at a future moment, a measurement result of the cell neighboring the current serving or camped cell at a future moment, a reselection success, a reselection failure, or frequent reselection.

8. The method according to any one of claims 1 to 3, wherein the first action comprises at least one of the following: performing the mobility-related model inference, performing the mobility-related model training, or obtaining mobility-related prediction data.

9. The method according to claim 8, wherein the prediction data comprises at least one of the following: a target cell for the cell handover or reselection, a success probability of the cell handover or reselection, signal quality of the current serving or camped cell, signal quality of at least one cell neighboring the current serving or camped cell, or time for the cell handover or reselection.

10. A communication apparatus, comprising a module configured to perform the method according to any one of claims 1 to 9.

11. A communication apparatus, comprising a processor and an interface circuit, wherein the interface circuit is configured to receive a signal from another communication apparatus different from the communication apparatus and transmit the signal to the processor, or send a signal from the processor to another communication apparatus different from the communication apparatus, and the processor is configured to implement the method according to any one of claims 1 to 9 by using a logic circuit or by executing code instructions.

12. A communication apparatus, comprising a memory and a processor, wherein the memory is configured to store computer instructions, and the processor is configured to execute the computer instructions, to implement the method according to any one of claims 1 to 9.

13. A communication chip, wherein the communication chip stores instructions, and when the chip runs in a communication device, the method according to any one of claims 1 to 9 is implemented.

14. A computer-readable storage medium, wherein the storage medium stores a computer program or instructions, and when the computer program or the instructions are executed by a communication apparatus, the method according to any one of claims 1 to 9 is implemented.

15. A computer program product, comprising computer program code, wherein when the computer program code is run on a communication apparatus, the communication apparatus implements the method according to any one of claims 1 to 9.
